# FASCICULE DE BREVET EUROPEEN

(11) **EP 2 900 524 B1**
(45) Date de publication et mention de la délivrance du brevet: **04.03.2020**
(21) Numéro de dépôt: 13774102.1
(22) Date de dépôt: 26.09.2013
(51) Int. Cl.: B60S 1/34, B60S 1/52

(54) **SYSTEME D'ESSUYAGE COMPRENANT UN BRAS D'ENTRAINEMENT D'UN BALAI D'ESSUYAGE D'UNE VITRE, NOTAMMENT PARE-BRISE DE VEHICULE AUTOMOBILE**
WISCHSYSTEM MIT EINEM ANTRIEBSARM ZUM ANTREIBEN EINES WISCHBLATTS EINER SCHEIBE, INSBESONDERE EINER WINDSCHUTZSCHEIBE EINES KRAFTFAHRZEUGS
WIPING SYSTEM COMPRISING A DRIVING ARM FOR DRIVING A WIPER BLADE OF A WINDOW, IN PARTICULAR FOR THE WINDSCREEN OF A MOTOR VEHICLE

(30) Priorité: 27.09.2012 FR 1259074
(43) Date de publication de la demande: 05.08.2015
(73) Titulaire: Valeo Systèmes d'Essuyage, 78322 Le Mesnil Saint Denis (FR)
(72) Inventeur: ROUSSEAU, Jean-François, F-63340 Charbonnier Les Mines (FR); GRASSO, Giuseppe, F-63340 Le Breuil sur Couze (FR); TREBOUET, Marcel, F-78450 Chavenay (FR)
(74) Mandataire: Valeo Systèmes d'Essuyage
(86) Numéro de dépôt international: PCT/EP2013/070135
(87) Numéro de publication internationale: WO 2014/049092

(56) Documents cités:
- FR-A1- 2 902 063
- FR-A1- 2 913 652
- FR-A1- 2 914 603
- JP-A- 2007 196 724
- JP-A- 2007 314 053
- US-A- 2 202 311
- US-A- 3 143 754

## Description

Le secteur technique de la présente invention est celui des systèmes d'essuyage d'une vitre d'un véhicule, notamment automobile. Le système conforme à l'invention est plus particulièrement destiné à être installé sur un pare-brise du véhicule.

Les automobiles sont couramment équipées de système d'essuyage du pare-brise, servant à assurer au conducteur une vision dégagée de son environnement, en particulier en cas d'intempéries. Un tel système comprend généralement deux balais d'essuyage qui raclent la surface extérieure du pare-brise de manière à évacuer en dehors du champ de vision du conducteur l'eau et/ou la neige présente sur cette surface.

Il est également connu des systèmes d'essuyage à un seul balai, en particulier pour les véhicules dont le pare-brise reste de taille limitée. Pour obtenir, un balayage satisfaisant, des tels systèmes sont équipés de deux bras d'actionnement donnant au balai une trajectoire faisant appel à deux points d'articulation.

Il est par ailleurs connu d'équiper les véhicules d'un système de lavage agencé pour projeter un liquide sur le pare-brise, de manière à faciliter la dissolution des salissures, et ainsi augmenter la qualité du nettoyage de ce pare-brise sous l'action du système d'essuyage (comme dans le document FR2902063 A1). Selon une version classique, ledit système de lavage comprend un ou des gicleurs installés sur un capot du véhicule, l'un de ces gicleurs étant dédié à l'arrosage d'une zone du pare-brise située en face du conducteur du véhicule, alors que l'autre gicleur est affecté à l'arrosage d'une zone du pare-brise située en face du passager avant du véhicule.

Dans une version améliorée, il a été proposé un balai d'essuyage qui comporte son propre élément de projection de liquide de lavage. Autrement dit, la projection du liquide de lavage a lieu depuis le balai d'essuyage lui-même, à partir de buses d'aspersion réparties le long dudit balai.

De tels dispositifs d'aspersion sont difficilement compatibles avec les systèmes d'essuyage à deux bras d'entrainement.

L'invention vise à pallier les inconvénients précités et propose à cet effet un système d'essuyage d'une vitre, notamment pare-brise de véhicule automobile, comprenant :
- un premier bras d'entraînement, ledit premier bras étant prévu tubulaire sur au moins une partie de sa longueur et muni d'un orifice latéral de passage d'un conduit de circulation d'un liquide de lavage d'un dispositif d'aspersion dudit liquide de lavage,
- un second bras d'entraînement d'un balai, lesdits bras étant configurés pour s'étendre parallèlement l'un à l'autre dans une position de repos, et
- un dispositif de connexion desdits bras et dudit balai, ledit orifice de passage étant prévu en vis-à-vis dudit second bras.

En permettant de la sorte à un conduit d'être guidé et protégé par le bras jusqu'au point où le liquide de lavage doit être acheminé, on améliore le fonctionnement du dispositif d'aspersion. On peut d'ailleurs noter qu'un tel avantage est non seulement vérifié dans les systèmes d'essuyage à deux bras mais s'étend à tout système d'essuyage comprenant au moins un bras d'entrainement sur lequel on souhaite rapporter un conduit circulation d'un liquide de lavage d'un dispositif d'aspersion dudit liquide de lavage.

Selon différents modes de réalisation qui pourront être pris ensemble ou séparément :
- ledit premier bras comprend deux grands côtés parallèles reliés par des petits côtés et ledit orifice de passage latéral est situé sur l'un desdits grands côtés,
- ledit premier bras comprend une extrémité proximale, destiné à être reliée à un dispositif d'actionement, et une extrémité distale opposée, ledit orifice de passage étant située à proximité de ladite extrémité distale.

Selon différents modes de réalisation, qui pourront être pris ensemble ou séparément :
- lesdits bras sont configurés pour s'étendre parallèlement l'un à l'autre dans une position de repos dudit système, ledit second bras comprenant un coude par lequel ledit second bras s'écarte dudit premier bras en direction d'une articulation dudit dispositif de connexion,
- ledit orifice de passage est situé en vis-à-vis dudit coude,
- ledit système comprend ledit balai, prévu muni d'un connecteur audit dispositif de connexion,
- ledit orifice de passage est localisé à une distance dudit connecteur permettant un cintrage dudit conduit entre ledit orifice de passage et ledit connecteur,
- ledit dispositif de connexion comprend une première articulation avec l'un desdits bras et une deuxième articulation avec l'autre desdits bras, ledit dispositif étant configuré pour recevoir le balai d'essuyage entre la première et la seconde articulation, selon une direction passant par lesdites articulations,
- une première desdites articulations est configurée pour autoriser le pivotement d'un premier desdits bras autour d'un premier axe de pivotement et/ou la seconde desdites articulations est configurée pour autoriser le pivotement du second desdits bras autour d'un second axe de pivotement.

Avantageusement, lesdits bras sont destinés à donner au balai d'essuyage une trajectoire comprenant une composante de pivotement autour d'un axe de pivotement du premier desdits bras, destiné à entrainer le balai, et une composante de décalage angulaire par rapport à ladite composante de pivotement par l'intermédiaire de l'autre desdits bras.

Ledit système pourra comprendre ledit dispositif d'aspersion, prévu configuré pour permettre une projection du fluide depuis ledit balai et/ou le ou lesdits bras, ledit dispositif d'aspersion comprenant ledit conduit.

Ledit système pourra par ailleurs comprendre un dispositif d'actionnement dudit premier bras, notamment un dispositif d'actionnement muni d'un ressort à fil ondulé.

D'autres caractéristiques, détails et avantages de l'invention ressortiront plus clairement à la lecture de la description donnée ci-après à titre indicatif en relation avec des dessins dans lesquels :
- la figure 1 illustre de façon schématique en vue de face un exemple de système d'essuyage conforme à l'invention, dans une première position,
- la figure 2 reprend la figure 1, ledit système d'essuyage étant dans une seconde position,
- la figure 3 est une première vue en perspective du système d'essuyage de la figure 1,
- la figure 4 est une autre vue en perspective du système d'essuyage de la figure 1 permettant de voir un dispositif de connexion dudit système selon un premier angle de vue,
- la figure 5 est une autre vue en perspective du système d'essuyage de la figure 1, permettant de voir ledit dispositif de connexion selon un second angle de vue, un balai dudit système d'essuyage étant illustré de façon éclaté du reste dudit système,
- la figure 6 reprend la figure 5, ledit balai d'essuyage étant cette fois assemblé au reste dudit système d'essuyage,
- la figure 7 est une autre vue en perspective du système d'essuyage de la figure 1, permettant de voir ledit dispositif de connexion et des extrémités de bras d'entrainement du balai d'essuyage dudit système, selon un troisième angle de vue,
- la figure 8 est une autre vue en perspective du système d'essuyage de la figure 1, permettant de voir les autres extrémités des bras d'entrainement, selon un quatrième angle de vue,
- la figure 9 est une autre vue en perspective du système d'essuyage de la figure 1, selon un cinquième angle de vue,
- la figure 10 est une autre vue en perspective du système d'essuyage de la figure 1, détaillant un dispositif d'actionnement dudit système, selon un angle de vue sensiblement identique à celui de la figure 8,
- la figure 11 montre en vue de face un exemple de ressort dudit dispositif d'actionnement.

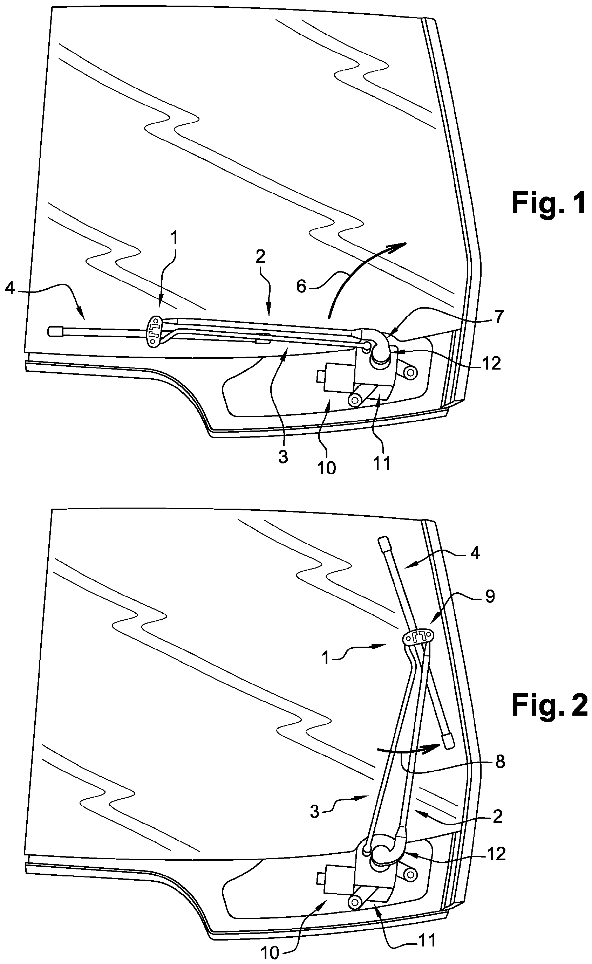

Comme illustré aux figures 1 et 2, l'invention concerne un système d'essuyage comprenant deux bras d'entrainement 2, 3, d'un balai d'essuyage 4 dudit système. Elle trouvera ses applications, notamment, en tant que système d'essuyage de vitre de véhicule automobile, en particulier pare-brise.

Le balai d'essuyage 4, lorsqu'il est monté sur le véhicule, est en appui contre une face extérieure du pare-brise du véhicule. Le pare-brise mentionné ici est un exemple d'une vitre essuyée par le système d'essuyage selon l'invention, mais il va de soi que cette vitre peut être une lunette arrière du véhicule et d'une manière générale tout vitrage d'un véhicule automobile dont la surface est apte à être essuyée par un système d'essuyage.

Lesdits bras 2, 3 sont destinés ici à donner au balai d'essuyage 4 une trajectoire comprenant une composante de pivotement, illustré par la flèche repérée 6, autour d'un axe d'entrainement 7 d'un premier 2 desdits bras, destiné à entrainer le balai 4, et une composante de décalage angulaire, illustrée par la flèche repérée 8, par rapport à ladite composante de pivotement par l'intermédiaire de l'autre 3 desdits bras, dit bras de guidage. Autrement dit, le bras d'entrainement fait pivoter ledit balai d'essuyage 4 autour dudit axe d'entrainement 7 pour le faire passer, de façon alternative, d'une position de repos illustré à la figure 1, à une position angulairement décalée, illustrée à la figure 2, de ladite position de repos, ceci de façon à balayer la surface désirée du pare-brise, tandis que ledit bras de guidage 3 fait tourner ledit balai d'essuyage 4 autour d'un point 9 mobile avec ledit balai d'essuyage 4, notamment afin d'adapter le mouvement du balai d'essuyage 4 à la forme du pare-brise.

Lesdits bras 2, 3 sont configurés, par exemple, pour s'étendre parallèlement l'un à l'autre dans ladite position de repos dudit système tandis qu'ils s'écartent légèrement l'un de l'autre lors de la rotation du bras d'entrainement 2, sous l'action dudit bras de guidage 3.

Ledit système est avantageusement destiné à être positionné sur le véhicule de façon à ce que ledit balai d'essuyage 4, au repos, soit en position sensiblement horizontale, par exemple, le long d'un bord inférieur du pare-brise.

Ledit système d'essuyage pourra en outre comporter un ensemble d'actionnement comprenant, par exemple, un moteur électrique 10, avantageusement électronisé, chargé de transformer l'énergie électrique en un mouvement de rotation, et des moyens de transmission 11 chargés de transmettre le mouvement de rotation délivré par le moteur à un dispositif d'actionnement 12, ici desdits bras 2, 3, développé plus loin et faisant également l'objet de la présente invention.

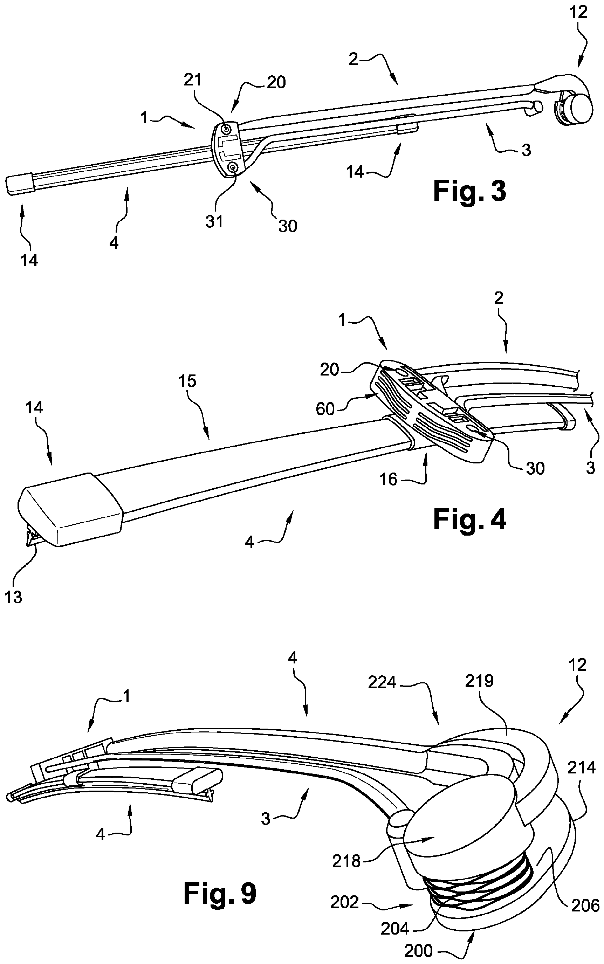

Comme illustré aux figures 3 et 4, le balais d'essuyage 4 est, par exemple, de type à lame plate (flat blade, en anglais), c'est-à-dire comprenant au moins une raclette ou lame d'essuyage 13 destinée à être plaquée contre le pare-brise et une ou plusieurs vertèbres de rigidification, non-visibles, reliées à la raclette 13 et qui s'étendent le long de celle-ci.

Ledit balai d'essuyage 4 pourra en outre comprendre des embouts d'assemblage 14 permettant de solidariser la raclette 10 et la ou les vertèbres au niveau de leurs extrémités longitudinales ainsi que, ici, un cache 15 de la ou desdites vertèbres.

Ledit balai d'essuyage comprend par ailleurs ici un connecteur 16 permettant de le raccorder au reste dudit système d'essuyage. Comme le ou lesdits embouts d'assemblage 14, ledit connecteur 16 pourra contribuer à l'assemblage de ladite raclette 13 à la ou auxdites vertèbres et/ou audit cache 15.

Cela étant, ledit système d'essuyage pourra comporter un dispositif de connexion 1 muni d'une première articulation 20 avec l'un 2 desdits bras et d'une deuxième articulation 30 avec l'autre 3 desdits bras, ledit dispositif de connexion 1 étant configuré pour recevoir le balai d'essuyage 4 entre la première 20 et la seconde 30 articulation, selon une direction passant par lesdites articulations 20, 30, en particulier de façon sensiblement centrée entre lesdites articulations 20, 30. On dispose de la sorte d'un dispositif de connexion léger et d'encombrement limité.

La première 20 desdites articulations est configurée pour autoriser le pivotement du premier 2 desdits bras autour d'un premier axe de pivotement 21 et/ou la seconde 30 desdites articulations est configurée pour autoriser le pivotement du second 3 desdits bras autour d'un second axe de pivotement 31. Ledit premier axe 21 et ledit second axe 31 de pivotement sont parallèles entre eux selon une direction, dite d'articulation, ici parallèle à ladite direction de pivotement autour de l'axe d'entrainement 7 dudit premier bras 2. Autrement dit, il s'agit d'une direction destinée à être orientée sensiblement orthogonalement au pare-brise. Ledit dispositif de connexion permet ainsi au balai de suivre la cinématique décrite plus haut, d'autres exemples de cinématique pouvant cependant bien sur être suivis par le système d'essuyage conforme à l'invention.

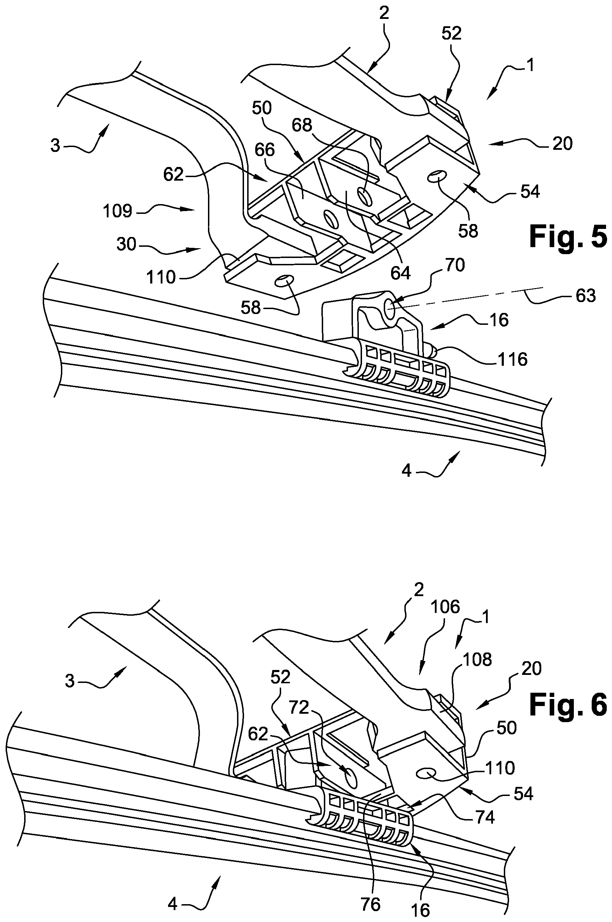

Comme plus particulièrement illustré aux figures 5 à 7, ledit dispositif de connexion 1 pourra comprendre un corps 50 dans lequel sont formées lesdites articulations 20, 30.

Ledit corps 50 comprend, par exemple, deux flasques 52, 54, ici parallèles, l'un dit supérieur et l'autre dit inférieur. L'une au moins desdites articulations 20, 30, ici les deux, est définie par deux orifices d'articulation 56, 58 respectivement formés dans chacun desdits flasques 52, 54, lesdits orifices 56, 58 étant situés en vis-à-vis selon ladite direction d'articulation 7. Autrement dit, la première articulation 20 est formée par un desdits orifices d'articulation 56 situé dans le flasque supérieur 52 et un desdits orifices d'articulation 58, situé en vis-à-vis dans le flasque inférieur 54, l'autre articulation 30 étant formés par les autres orifices d'articulation 56, 58.

Lesdits flasques 52, 54 sont destinés à être orientés orthogonalement auxdites directions de pivotement 21, 31. Ledit corps 50 comprend en outre ici une face frontale 60 (figure 4) reliant les flasques supérieur 52 et inférieur 54. Ledit corps 50 est, par exemple, ouvert du côté opposé à ladite face frontale 60 pour accueillir lesdits bras 2, 3 ainsi que sur les côtés pour laisser le débattement nécessaire à l'articulation des bras 2, 3 autour desdits axes de pivotement 21, 31.

Ledit corps 10 pourra en outre comprendre une tête d'accrochage 62 du connecteur 16 du balai 4. Ladite tête d'accrochage est située, par exemple, entre lesdits paires d'orifices d'articulation 56, 58, selon la direction passant par lesdites articulations 20, 30. Ladite tête d'accrochage est ici issue dudit flasque supérieur 52 et s'étend jusqu'audit flasque inférieur 54.

Ladite tête d'accrochage 62 pourra être configurée pour permettre une rotation du balai 4 autour d'un axe transversal 63, notamment orthogonal, à un plan suivant une direction d'extension longitudinale du balai 4 et ladite direction d'articulation 7. Autrement dit, ledit balai d'essuyage 4 est articulé en rotation autour de l'axe reliant lesdites articulations 20, 30 desdits bras 2, 3. Ladite tête d'accrochage 62 est par exemple munie pour cela de flancs 64, 66 présentant des orifices de pivotement 68, situés en vis-à-vis selon ledit axe transversal 63.

De son côté, ledit connecteur 16 comprend, par exemple, une lumière 70 de passage d'un goupille d'articulation 72, ladite tête d'accrochage 62 et ledit connecteur 16 étant configurés pour que ladite lumière 70 et lesdits orifices de pivotement 68 puissent venir en vis-à-vis pour le passage de ladite goupille d'articulation 72. Selon un autre mode de réalisation, non-illustré, des pions pourraient être prévue sur ledit connecteur 16 pour coopérer avec lesdits orifices de pivotement 68 de la tête d'accrochage 62, ou inversement.

Ledit corps 10 est, par exemple, en matériau plastique. Il comprend ici des évidements 74 au niveau desdits flasques 52, 54 et/ou de ladite face frontale 60, notamment pour alléger ledit dispositif de connexion 1. En particulier, sur ledit flasque inférieur 54, des ponts de matière 76 sont formés autour desdits évidements 74, entre lesdits flancs 64, 66 de ladite tête d'accrochage 62 et un voisinage des orifices d'articulation 58 dudit flasque inférieur 54. Sur le flasque supérieur 52 les évidements 74 présentent ici une forme en S. Ledit corps 10 pourra présenter, comme illustré, une structure symétrique par rapport un plan destiné à passer par l'axe longitudinale du balai d'essuyage 4.

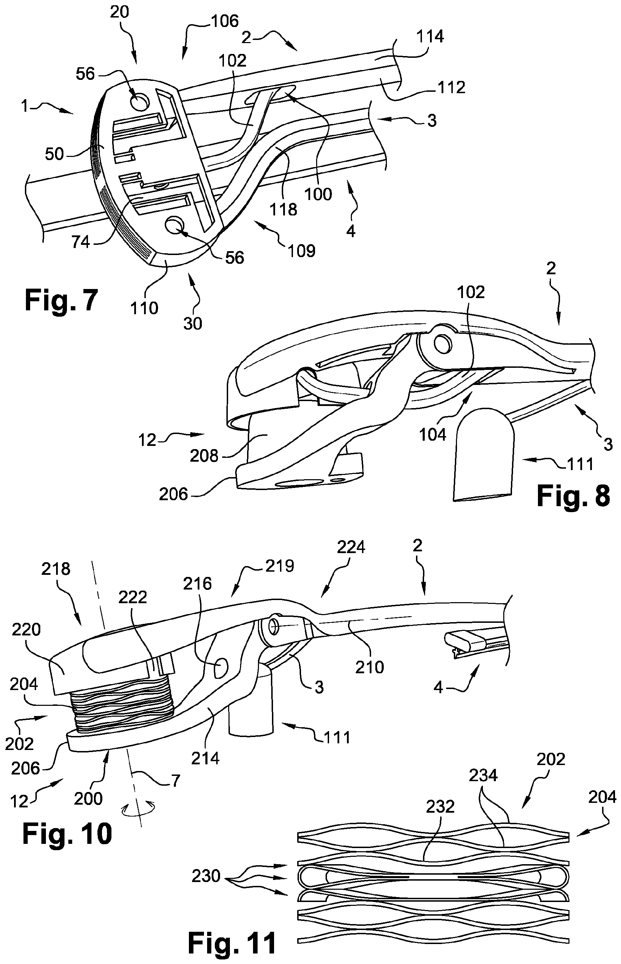

Comme cela est plus particulièrement visible à la figure 7, selon l'invention ledit bras d'entrainement 2 est tubulaire sur au moins une partie de sa longueur, ici sur l'ensemble. Il est en outre muni d'un orifice latéral 100, notamment sensiblement rectangulaire, de passage d'un conduit 102 de circulation d'un liquide de lavage d'un dispositif d'aspersion dudit liquide de lavage. On dispose de la sorte d'une solution permettant d'alimenter ledit dispositif d'aspersion quand celui-ci est configuré pour projeter le liquide de lavage depuis une pièce mobile dudit système d'essuyage, en particulier ledit balai 4. On peut d'ailleurs noter qu'une telle solution trouve son intérêt y compris dans des systèmes d'essuyage à un seul bras d'entraînement.

Comme mieux visible à la figure 8, ledit bras d'entraînement 2 comporte une extrémité axiale 104, proximale, reliée audit dispositif d'actionnement 12. Ladite extrémité axiale proximale 104 est ici ouverte et ledit conduit 102 entre dans ledit bras d'entrainement 2 par ladite extrémité axiale proximale 104.

Ledit bras d'entraînement 2 est, par exemple, en métal. Il s'agit, notamment, d'un tube électro soudé.

Si l'on se reporte de nouveau aux figures 5 à 7, on constate que ledit bras d'entrainement 2 comporte à son extrémité axiale distale 106, opposée à ladite extrémité axiale proximale, une tête d'articulation 108 sur ledit dispositif de connexion 1. Ladite tête d'articulation 108 du bras d'entraînement 2 présente des orifices d'articulation, non-visibles, prévus dans ledit bras d'entraînement pour le passage d'une goupille 110. Pour cela, lesdits orifices d'articulation 56, 58 du corps 10 et lesdits orifices de connexion du bras d'entraînement 2 sont configurés pour se trouver en vis-à-vis de façon à définir avec ladite goupille une liaison pivot entre ledit bras d'entraînement 2 et ledit corps 10.

Ledit bras de guidage 3 pourra présenter à son extrémité longitudinale distale 109 une tête d'articulation 110 sur ledit corps 10, de structure identique à celle dudit bras d'entrainement 2. Ledit bras de guidage 3 pourra lui aussi être tubulaire. Il est ici lié par son extrémité longitudinale proximale, opposée à ladite extrémité distale 109, à une articulation en rotation 111 (figure 8), destinée à être assujettie au véhicule.

Ledit bras d'entrainement 2 comprend deux grands côtés 112, parallèles, reliés par des petits côtés 114. Ledit orifice de passage latéral 100 est situé ici sur l'un desdits grands côtés 112, en particulier à proximité de ladite extrémité distale 106. Autrement dit, ledit orifice latéral 100 est situé à proximité de ladite tête d'articulation 108 du bras d'entrainement 2.

Ledit orifice latéral 100 est prévu, par exemple, en vis-à-vis dudit bras de guidage 3, en particulier en vis-à-vis de l'extrémité distale 109 dudit bras de guidage 3. Ledit orifice latéral 100 pourra avantageusement être localisé à une distance dudit connecteur 16 du balai 4 permettant un cintrage dudit conduit 102 entre ledit orifice de passage 100 et ledit connecteur 16 sur lequel ledit conduit 102 est ici connecté par un embout 116.

Ledit bras de guidage 3 comporte ici un coude 118 par lequel ledit bras de guidage 3 s'écarte dudit bras d'entrainement 2, en direction de son articulation 30 sur ledit dispositif de connexion 1. Ledit orifice latéral 100 est situé, par exemple, en vis-à-vis dudit coude 118.

Comme plus particulièrement illustré aux figures 9 à 11, et comme déjà évoqué plus haut, ledit dispositif d'essuyage pourra comprendre un dispositif d'actionnement 12 d'un bras d'entrainement d'un balai, en particulier dudit bras d'entrainement 2 du balai 4.

Ledit dispositif d'actionnement 12 comprend, par exemple, un moyeu d'entrainement 200 dudit bras d'entrainement 2 autour de l'axe de pivotement 7 et un moyen de rappel élastique 202, configuré pour appliquer ledit bras d'entrainement 2 en direction du pare-brise en prenant appui sur le moyeu 200, ledit moyen de rappel 202 comprenant un ressort 204 du type à fil ondulé. Un tel ressort offre l'avantage de présenter une raideur significative dans un encombrement et pour un poids limité. On constate d'ailleurs qu'une telle solution trouve son intérêt non seulement dans des systèmes d'essuyage à deux bras comme dans le système illustré mais également dans des systèmes d'essuyage à un seul bras d'entraînement.

Ledit ressort 204 est positionné sur le moyeu 200 de façon à exercer un effort, dit axial, orienté selon ledit axe de pivotement 7. Ledit moyeu comprend, par exemple, une base 206 dont est issu un plot 208 (mieux visible figure 8). Ledit ressort 204 prend appui sur ladite base 206 en étant disposé autour dudit plot 208. Ladite base 206 est destinée à être assujettie au véhicule.

Ledit moyeu 200 pourra comprendre un axe d'articulation 210 du bras d'entrainement 2, orienté transversalement audit axe de pivotement 7. Ledit axe d'articulation est ici orienté orthogonalement audit axe de pivotement 7. Ledit axe d'articulation 210 est situé, par exemple, au niveau d'un bras coudé 214 issu de ladite base 206. Ledit bras 214 de la base 206 du moyeu pourra présenter une lumière 216 pour le passage du conduit 102 de circulation du liquide lave glace.

Ledit dispositif d'actionnement 7 comprend, par exemple, une pièce 218 d'appui liée au bras d'entrainement 2. Il s'agit d'une pièce formant capot du plot 208 et du ressort 204 et se prolongeant par un coude 219 en direction dudit bras d'entrainement 2, ici pour le recouvrir, au moins partiellement, à la façon d'un cache. La partie de la pièce 218 formant capot du plot 208 et du ressort 204 pourra comprendre une jupe 220 s'étendant axialement en direction de ladite base 206 du moyeu. Ladite jupe 220 comprend, par exemple, une fente 222 de passage dudit conduit 102 de circulation du liquide lave glace.

Ladite pièce d'appui 218 et ledit ressort 204 sont avantageusement configurés pour que ladite pièce d'appui 218 fasse pivoter ledit bras d'entrainement en direction du pare-brise, autour dudit axe d'articulation 210, sous l'action dudit ressort 204. Ledit ressort 204 est pour cela disposé, par exemple, entre ledit moyeu 200 et une zone dite de prise d'effort de ladite pièce 218, correspondant ici au capot du plot 208 et du ressort 204, ledit ressort étant destiné à exercer son effort axial sur ladite zone de prise d'effort. Ladite pièce 218 comprend en outre une zone 224 de report de l'effort sur ledit bras d'entrainement 2, au-delà dudit axe d'articulation 210 du bras d'entrainement 2. Ladite pièce 218 pourra également définir un déflecteur d'air, en particulier au niveau de ladite zone 224 de report de l'effort. Ladite pièce 218 est, par exemple, en plastique ou en matériau naturel.

Comme plus particulièrement visible à la figure 11, ledit ressort 204 est, notamment, du type à fil plat. Il comprend, par exemple, des spires 230 munies d'ondulations 232 définissant des crêtes 234. Les crêtes 234 desdites ondulations 232 desdites spires 230 sont ici en contact avec une spire 230 voisine. Lesdites ondulations 232 pourront être jointes crête à crête d'une spire 230 à l'autre. Ledit ressort comprend, par exemple, cinq à dix spires 230 et/ou cinq à dix crêtes 232 par spire.

Ledit système d'essuyage pourra comprendre en outre un dispositif d'aspersion d'un liquide lave-glace, en particulier un dispositif d'aspersion depuis ledit balai 4.

Ledit dispositif d'aspersion pourra comprendre une rampe d'aspersion, non-illustrée, s'étendant le long du balai d'essuyage, selon la direction longitudinale d'extension de ce dernier, ladite rampe comportant une pluralité d'orifices de projection agencés pour projeter le liquide de lavage au moins perpendiculairement à la direction longitudinale dans lequel il s'étend.

Selon un exemple de réalisation, ladite rampe de projection est fabriquée distinctement de la raclette 13, et rapportée sur cette dernière. Selon un autre exemple de réalisation, ladite rampe d'aspersion pourra être formée par un conduit intégré à la raclette 13, et qui chemine le long de la direction longitudinale de cette dernière.

Ledit dispositif d'aspersion pourra être configuré pour asperger ladite vitre depuis ledit balai 4 selon une première et/ou une seconde direction d'aspersion opposée. Autrement dit, une dite rampe d'aspersion pourra être située de chaque côté dudit balai 4 pour asperger la vitre par un premier et/ou un second desdits côtés, notamment en fonction du sens ascendant ou descendant du balai 4.

Ledit circuit d'alimentation comprend en outre, par exemple, ledit conduit 102, flexible, d'alimentation en liquide lave-glace.

Ledit dispositif d'aspersion pourra être alimenté par un dispositif de transport du liquide de lavage du pare-brise, non représenté. Selon un exemple de réalisation, un tel dispositif de transport du liquide prend la forme d'un ou plusieurs tuyaux qui canalisent le liquide de lavage depuis au moins un réservoir installé, par exemple, dans un compartiment avant du véhicule jusqu'audit conduit 120, prévu débouchant, par exemple, à travers ledit plot 208 du moyeu 200, prévu creux. Le liquide de lavage est mis en circulation dans le dispositif de transport de liquide, notamment, par au moins une pompe.

Le dispositif de transport du liquide, la pompe et optionnellement le réservoir forment un ensemble d'approvisionnement en liquide de lavage.

Le système d'essuyage et de lavage pourra également comprendre un dispositif de chauffage du liquide de lavage. Ce dernier est, par exemple, incorporé au réservoir. Alternativement, il peut être placé en tout endroit du dispositif de transport du liquide, par exemple de manière à entourer une portion d'un des tuyaux formant ce dispositif de transport.

## Revendications

1. Système d'essuyage d'une vitre, notamment pare-brise de véhicule automobile, comprenant :
- un premier bras d'entraînement (2), ledit premier bras (2) étant prévu tubulaire sur au moins une partie de sa longueur et muni d'un orifice latéral (100) de passage d'un conduit (102) de circulation d'un liquide de lavage d'un dispositif d'aspersion dudit liquide de lavage, ledit système d'essuyage étant **caractérisé en ce que** le système d'essuyage comprend aussi
- un second bras d'entrainement (3) d'un balai (4), lesdits bras étant configurés pour s'étendre parallèlement l'un à l'autre dans une position de repos, et
- un dispositif de connexion (1) desdits bras (2, 3) et dudit balai (4),
ledit orifice de passage (100) étant prévu en vis-à-vis dudit second bras (3).

2. Système d'essuyage selon la revendication 1 dans lequel ledit bras (2) comprend deux grands côtés (112) parallèles reliés par des petits côtés (114) et ledit orifice de passage latéral (100) est situé sur l'un desdits grands côtés (112).

3. Système d'essuyage selon l'une quelconque des revendications 1 ou 2 dans lequel ledit premier bras (2) comprend une extrémité proximale (104), destiné à être reliée à un dispositif d'actionnement (12), et une extrémité distale opposée (106), ledit orifice de passage (100) étant située à proximité de ladite extrémité distale (106).

4. Système selon l'une quelconque des revendications précédentes comprenant un dispositif de connexion (1) desdits bras (2, 3) et dudit balai (4) et dans lequel lesdits bras (2, 3) sont configurés pour s'étendre parallèlement l'un à l'autre dans une position de repos dudit système, ledit second bras (3) comprenant un coude (118) par lequel ledit second bras (3) s'écarte dudit premier bras en direction d'une articulation (30) dudit dispositif de connexion (1).

5. Système selon la revendication 4 dans lequel ledit orifice de passage (100) est situé en vis-à-vis dudit coude (118).

6. Système selon l'une quelconque des revendications 4 ou 5 comprenant ledit balai (4), prévu muni d'un connecteur (16) audit dispositif de connexion (1), et dans lequel ledit orifice de passage (100) est localisé à une distance dudit connecteur (100) permettant un cintrage dudit conduit (102) entre ledit orifice de passage (100) et ledit connecteur (16).

7. Système selon l'une quelconque des revendications 4 à 6 dans lequel ledit dispositif de connexion comprend une première articulation (20) avec l'un (2) desdits bras et une deuxième articulation (30) avec l'autre (3) desdits bras, ledit dispositif étant configuré pour recevoir le balai d'essuyage (4) entre la première et la seconde articulation (20, 30), selon une direction passant par lesdites articulations (20, 30).

8. Système selon la revendication 7 dans lequel une première (20) desdites articulations est configurée pour autoriser le pivotement d'un premier (2) desdits bras autour d'un premier axe de pivotement (21) et/ou la seconde (30) desdites articulations est configurée pour autoriser le pivotement du second desdits bras autour d'un second axe de pivotement (31).

9. Système d'essuyage selon l'une quelconque des revendications précédentes dans lequel lesdits bras (2, 3) sont destinés à donner au balai d'essuyage une trajectoire comprenant une composante de pivotement autour d'un axe de pivotement (7) du premier (2) desdits bras, destiné à entrainer le balai (4), et une composante de décalage angulaire par rapport à ladite composante de pivotement par l'intermédiaire de l'autre (3) desdits bras.

10. Système selon l'une quelconque des revendications précédentes comprenant ledit dispositif d'aspersion, prévu configuré pour permettre une projection du fluide depuis ledit balai (3) et/ou le ou lesdits bras (2, 3), ledit dispositif d'aspersion comprenant ledit conduit (102).

11. Système selon l'une quelconque des revendications précédentes comprenant un dispositif d'actionnement (12) dudit premier bras (2).

12. Système selon la revendication 11 dans lequel ledit dispositif d'actionnement (12) comprend un ressort (104) à fil ondulé.

## Patentansprüche

1. Wischsystem für eine Scheibe, insbesondere die Windschutzscheibe eines Kraftfahrzeugs, umfassend:
- einen ersten Antriebsarm (2), wobei der erste Arm (2) über mindestens einen Teil seiner Länge röhrenförmig vorgesehen ist und mit einer seitlichen Durchgangsöffnung (100) für eine Zirkulationsleitung (102) einer Waschflüssigkeit einer Sprühvorrichtung für die Waschflüssigkeit versehen ist, wobei das Wischsystem **dadurch gekennzeichnet ist, dass** das Wischsystem ferner umfasst:
- einen zweiten Antriebsarm (3) zum Antreiben eines Wischerblatts (4), wobei die Arme dazu ausgestaltet sind, sich in einer Ruhestellung parallel zueinander zu erstrecken, und
- eine Verbindungsvorrichtung (1) zum Verbinden der Arme (2, 3) und des Wischerblatts (4), wobei die Durchgangsöffnung (100) gegenüber dem zweiten Arm (3) vorgesehen ist.

2. Wischsystem nach Anspruch 1, bei dem der Arm (2) zwei parallele Breitseiten (112) umfasst, die durch Schmalseiten (114) verbunden sind, und die seitliche Durchgangsöffnung (100) an einer der Breitseiten (112) gelegen ist.

3. Wischsystem nach einem der Ansprüche 1 oder 2, bei dem der erste Arm (2) ein proximales Ende (104), das dazu bestimmt ist, mit einer Betätigungsvorrichtung (12) verbunden zu werden, und ein entgegengesetztes distales Ende (106) umfasst, wobei die Durchgangsöffnung (100) in der Nähe des distalen Endes (106) gelegen ist.

4. System nach einem der vorhergehenden Ansprüche, das eine Verbindungsvorrichtung (1) zum Verbinden der Arme (2, 3) und des Wischerblatts (4) umfasst und bei dem die Arme (2, 3) dazu ausgestaltet sind, sich in einer Ruhestellung des Systems parallel zueinander zu erstrecken, wobei der zweite Arm (3) eine Krümmung (118) umfasst, durch die sich der zweite Arm (3) vom ersten Arm in Richtung eines Gelenks (30) der Verbindungsvorrichtung (1) entfernt.

5. System nach Anspruch 4, bei dem die Durchgangsöffnung (100) gegenüber der Krümmung (118) gelegen ist.

6. System nach einem der Ansprüche 4 oder 5, welches das Wischerblatt (4) umfasst und mit einem Verbinder (16) an der Anschlussvorrichtung (1) versehen ist und bei dem die Durchgangsöffnung (100) in einem Abstand von dem Verbinder (100) angeordnet ist, der ein Biegen des Kanals (102) zwischen der Durchgangsöffnung (100) und dem Verbinder (16) ermöglicht.

7. System nach einem der Ansprüche 4 bis 6, bei dem die Verbindungsvorrichtung ein erstes Gelenk (20) mit dem einen (2) der Arme und ein zweites Gelenk (30) mit dem anderen (3) der Arme umfasst, wobei die Vorrichtung dazu ausgestaltet ist, das Wischerblatt (4) zwischen dem ersten und dem zweiten Gelenk (20, 30) entlang einer durch die Gelenke (20, 30) verlaufenden Richtung aufzunehmen.

8. System nach Anspruch 7, bei dem ein erstes (20) der Gelenke dazu ausgestaltet ist, das Schwenken eines ersten (2) der Arme um eine erste Schwenkachse (21) zuzulassen, und/oder das zweite (30) der Gelenke dazu ausgestaltet ist, das Schwenken des zweiten der Arme um eine zweite Schwenkachse (31) zuzulassen.

9. Wischsystem nach einem der vorhergehenden Ansprüche, bei dem die Arme (2, 3) dazu bestimmt sind, dem Wischerblatt eine Bewegungsbahn zu geben, die eine Schwenkkomponente um eine Schwenkachse (7) des ersten (2) der Arme, der dazu bestimmt ist, das Wischerblatt (4) anzutreiben, und eine Winkelversatzkomponente in Bezug auf die Schwenkkomponente mittels des anderen der Arme (3) umfasst.

10. System nach einem der vorhergehenden Ansprüche, das die Sprühvorrichtung umfasst, die dazu ausgestaltet ist, ein Spritzen der Flüssigkeit von dem Wischerblatt (3) und/oder dem oder den Armen (2, 3) aus zu ermöglichen, wobei die Sprühvorrichtung die Leitung (102) umfasst.

11. System nach einem der vorhergehenden Ansprüche, das eine Betätigungsvorrichtung (12) zum Betätigen des ersten Arms (2) umfasst.

12. System nach Anspruch 11, bei dem die Betätigungsvorrichtung (12) eine Wellenfeder (104) umfasst.

## Claims

1. A system for wiping a window, in particular a windshield of a motor vehicle, comprising :
- a first driving arm (2) said first driving arm (2) being tubular over at least part of its length and being provided with a lateral orifice (100) through which a duct (102) for the circulation of a washing liquid, of a device for spraying said washing liquid, can pass, said wiping system being **characterized in that** the wiping system further comprises :
- a second driving arm (3) for the wiper (4), said arms (2, 3) being configured so as to extend parallel to each other in a rest position, and
- a device (1) for connecting said arms (2, 3) and said wiper (4),
said passage orifice (100) being provided facing said second arm (3).

2. The wiping system as claimed in claim 1, in which said arm (2) comprises two parallel large sides (112) connected by small sides (114) and said lateral passage orifice (100) is located on one of said large sides (112).

3. The wiping system as claimed in either of claims 1 and 2, comprising a proximal end (104) intended to be connected to an actuating device (12), and an opposite distal end (106), said passage orifice (100) being located close to said distal end (106).

4. The system as claimed in any one of the preceding claims, comprising a device (1) for connecting said arms (2, 3) and said wiper (4), and in which said arms (2, 3) are configured so as to extend parallel to each other in a rest position of said system, said second arm (3) comprising a kink (118) by means of which said second arm (3) diverges from said first arm toward an articulation (30) of said connection device (1).

5. The system as claimed in claim 4, in which said passage orifice (100) is positioned facing said kink (118) .

6. The system as claimed in either of claims 4 and 5, comprising said wiper (4), provided with a connector (16) to said connection device (1), and in which said passage orifice (100) is located at a distance from said connector (100), allowing said duct (102) to be curved between said passage orifice (100) and said connector (16) .

7. The system as claimed in any one of claims 4 to 6, in which said connection device comprises a first articulation (20) with one (2) of said arms and a second articulation (30) with the other (3) of said arms, said device being configured to receive the wiper (4) between the first and the second articulation (20, 30), in a direction passing through said articulations (20, 30).

8. The system as claimed in claim 7, in which a first one (20) of said articulations is configured to allow a first one (2) of said arms to pivot about a first pivot axis (21) and/or the second (30) of said articulations is configured to allow the second of said arms to pivot about a second pivot axis (31).

9. The wiping system as claimed in any one of the preceding claims, in which said arms (2, 3) are intended to give the wiper a trajectory that comprises a pivoting component about a pivot axis (7) of the first (2) of said arms, intended to drive the wiper (4), and a component with an angular offset with respect to said pivoting component by way of the other (3) of said arms.

10. The system as claimed in any one of the preceding claims, comprising said spraying device, provided configured so as to allow the fluid to be projected from said wiper (3) and/or said arm or arms (2, 3), said spraying device comprising said duct (102).

11. The system as claimed in any one of the preceding claims, comprising an actuating device (12) for said arm (2).

12. The system as claimed in claim 11, in which said actuating device (12) comprises a wave spring (104).
